# EUROPÄISCHE PATENTSCHRIFT

(11) **EP 1 797 132 B1**
(45) Veröffentlichungstag und Bekanntmachung des Hinweises auf die Patenterteilung: **26.11.2008**
(21) Anmeldenummer: 05779602.1
(22) Anmeldetag: 17.09.2005
(51) Int. Cl.: C08G 83/00, C08L 101/00, C08G 69/16, C08G 69/08

(54) **VERFAHREN ZUR KONTINUIERLICHEN HERSTELLUNG VON POLYAMIDEN MIT VERBESSERTEN FLIESSEIGENSCHAFTEN**
METHOD FOR CONTINUOUSLY PRODUCING POLYAMIDES HAVING IMPROVED FLOW PROPERTIES
PROCEDE DE PRODUCTION CONTINUE DE POLYAMIDES AUX PROPRIETES D'ECOULEMENT AMELIOREES

(30) Priorität: 02.10.2004 DE 102004048110
(43) Veröffentlichungstag der Anmeldung: 20.06.2007
(73) Patentinhaber: LANXESS Deutschland GmbH, 51369 Leverkusen (DE)
(72) Erfinder: SCHÄFER, Marcus, 47829 Krefeld (DE); VAN MULLEKOM, Robert Hubertus, 9160 Lokeren (DE); JOACHIMI, Detlev, 47800 Krefeld (DE)
(86) Internationale Anmeldenummer: PCT/EP2005/010053
(87) Internationale Veröffentlichungsnummer: WO 2006/037454

(56) Entgegenhaltungen:
- EP-A- 0 672 703
- EP-A- 0 774 480
- WO-A-20/05049693

## Beschreibung

Die vorliegende Erfindung betrifft ein verbessertes Verfahren zur kontinuierlichen Herstellung von sternförmig verzweigten Polyamiden. Polyamidformmassen die diese Polyamide enthalten, zeichnen sich durch verbesserte Fließeigenschaften aus.

Die Herstellung von Polyamiden (PA) mittels sogenannter vereinfacht kontinuierlicher Verfahren (VK-Rohrtechnologie) ist beispielsweise in der WO2003040212 und den darin enthaltenen Literaturzitaten beschrieben und wird mit ihrem Inhalt von der vorliegenden Erfindung voll umfasst.

Im industriellen Maßstab wird Polyamid 6 in einem VK-Rohr produziert, indem flüssiges Caprolactam mit ca.. 1 - 4 % Wasser von oben einem oder einer Reihe von vertikalen Rohrreaktoren zugeführt wird. Überschüssiges Wasser wird abdestilliert. Die Polymerisation wird bei Temperaturen zwischen 240 °C und 270 °C und einer Verweilzeit von 15 bis zu 30 Stunden durchgeführt. Eine deutliche Beschleunigung des Verfahrens um einige Stunden lässt sich durch Vorschalten einer Druckstufe erreichen, in der die geschwindigkeitsbestimmende Spaltung von Caprolactam bei erhöhtem Druck unter ansonsten ähnlichen Bedingungen durchgeführt wird.

Bei diesem Verfahrenskonzept wird die erreichbare Viskosität durch den Wassergehalt der Schmelze oder durch Zugabe kettenregelnder Substanzen bestimmt. In der Regel werden relative Viskositäten um 2,6 - 3,0 (gemessen als 1 %-ige Lösung in m-Kresol bei 25 °C) erreicht.

Einstufige und zweistufige Verfahren für die Polykondensation von Lactamen zur Herstellung von Polyamid sind dem Fachmann bekannt und werden beispielsweise im Kunststoff Handbuch, Technische Thermoplaste Polyamide 3/4, Carl Hanser Verlag, München, 1998, S. 65 - 70 beschrieben. Polyamid 6 selber wird in der Regel in einem mehrstufigen Verfahren hergestellt. Caprolactam und Additive wie beispielsweise Wasser und Kettenregler werden in eine Druckstufe gegeben, in der die Hydrolyse des Caprolactams stattfindet und ein Präpolymer erzeugt wird. Dieses Präpolymer kann unter Druck oder durch eine Schmelzeaustragspumpe direkt oder über einen Schmelzetrockner in ein VK-Rohr überführt werden. Vorzugsweise erfolgt dies über einen Schmelzeverteiler. Flüchtige Komponenten werden über einen Dephlegmator aus der Reaktion entfernt. Durch das Entfernen von Wasser konzentriert sich die Schmelze auf. Dieser Vorgang setzt sich fort, bis das Wasser aufgrund des hydrostatischen Druckes der Schmelze nicht mehr entfernt wird und sich die Schmelze dann im thermodynamischen Gleichgewicht befindet. Am Austritt des VK-Rohres wird die Schmelze über eine Austragspumpe in eine Granuliervorrichtung, beispielsweise für die Strang- oder Unterwassergranulierung, überführt. Das Granulat wird dann in einem Extrakteur extrahiert und anschließend in einem Trockner getrocknet und in ein Silo überführt. Die Extraktwässer werden in einer Rückgewinnungsanlage konzentriert und der Polymerisation erneut zugefügt.

Polyamide zeichnen sich durch eine Vielzahl vorteilhafter Eigenschaften wie z.B. hohe Zähigkeit, hohe Temperaturfestigkeit u.a. aus, die ihnen im Bereich der technischen Thermoplaste einen festen Platz im Markt sichern. Diese Basiseigenschaften eines Polymers werden im Allgemeinen durch die Zugabe von Zusatzstoffen oder Additiven modifiziert. Polymer und Additive zusammen ergeben die sogenannte Formmasse. Polyamidformmassen kommen in vielen Anwendungen zum Einsatz. Beispielhaft genannt seien Spritzgussteile z.B. für den Automobilmarkt oder Extrudate wie Folien oder Hohlkörper für den Verpackungsbereich.

Kunststoffe, beispielsweise Polyamid, werden zur mechanischen Verbesserung oft mit Füllstoffen, beispielsweise Glasfasern, Wollastonit, Kaolin oder Calciumcarbonat im Extrusionsverfahren vermischt. Die auf diese Weise erhaltenen Formmassen werden zur Herstellung von Formkörpern, beispielsweise mittels Spritzgussverfahren eingesetzt. Die Füllstoffe können zu einer Erhöhung der Schmelzviskosität der Formmassen führen und begrenzen die Fließfähigkeit dieser Formmassen. Eine hohe Fließfähigkeit der Formmassen ist für die gleichmäßige und vollständige Füllung einer Form, sowie für die Reduktion von Zykluszeiten und der Fülldrucke bei der Spritzgießverarbeitung vorteilhaft. Um die hohe Fließfähigkeit der Polyamidformmassen bei der Spritzgießverarbeitung zu gewährleisten, ist eine möglichst geringe Schmelzviskosität des eingesetzten Polyamidharzes erforderlich.

Die Verringerung der Schmelzviskosität eines Polyamidharzes kann über eine Verringerung des Molekulargewichtes, wie beispielsweise in US-A 5 274 033 beschrieben, erfolgen. Nachteilig ist aber der negative Einfluss auf mechanische Eigenschaften des Werkstoffes, der mit dem verringerten Molekulargewicht einhergeht.

Aus Schaefgen, Flory, J. Am. Chem. Soc, 70 (1948), 2709-2718 ist die Herstellung von sternförmig verzweigten Polyamiden aus Caprolactam, Wasser und einem Verzweiger mit 4 oder mehr Carbonsäuregruppen bekannt. Die beschriebenen Polyamide zeigen eine Verringerung der Schmelzviskosität im Vergleich mit einem linearen Polyamid mit einem vergleichbaren Molekulargewicht.

Aus US-A 5346984 ist außerdem bekannt, dass ein sternförmig verzweigtes PA 6, hergestellt aus einem Verzweiger mit mehr als 3 Carbonsäuregruppen, eine signifikante Reduktion der Schmelzviskosität aufweist, während die übrigen Eigenschaften sich nicht oder nur geringfügig verändern.

Aus diesen Beispielen geht hervor, dass zur Verbesserung der Fließfähigkeit einer Polyamidformmasse die Reduktion der Schmelzviskosität eines PA 6-Harzes bevorzugt über die bekannte sternförmige Verzweigung der Polyamidketten erfolgen soll, weil auf diese Art und Weise der wünschenswerte Erhalt der übrigen Polymereigenschaften gegeben ist.

Nachteil der im Stand der Technik beschriebenen Verfahren ist die Herstellung des sternförmig verzweigten Polyamids in einem diskontinuierlichen Autoklavenprozess. Eine Übertragung von Autoklavenreaktionen auf einen kontinuierlichen Prozess ist nicht direkt möglich.

Polyamide werden jedoch bevorzugt in einem kontinuierlichen Prozess hergestellt, weil dieser zu einheitlicheren Produkten, konstanterer Qualität, längeren Standzeiten und höheren Durchsätzen bei geringerem Arbeitsaufwand und geringeren Rüst- und Reinigungszeiten führt. Besonders vorteilhaft ist es, wenn dem Fachmann bekannte kontinuierliche Verfahren zur Herstellung von Polyamiden auch zur Herstellung sternförmig verzweigter Polyamide zur Verfügung stehen.

DE-A 10 354 606 beschreibt ein kontinuierliches Verfahren zur Herstellung sternförmig verzweigter Polyamide mit fließverbesserten Eigenschaften unter Verwendung einer Verbindung mit 4 Carbonsäuregruppen als Verzweiger. Bei diesem Verfahren erfolgt die Dosierung der Verzweiger in den Lactamstrom zur Druckstufe, d. h. am Anfang des kontinuierlichen Polymerisationsprozesses, wo die Hydrolyse des eingesetzten Lactams stattfindet. Obwohl diese Verfahrensweise einen effizienten Einbau der Verzweiger garantiert, wird durch die Zugabe der Verzweiger an dieser Stelle diese bzw. die Folgeprodukte einer langen Verweilzeit bei hoher Temperatur ausgesetzt. Dies ist nachteilig, da es durch Abbau des Verzweigers zur Verfärbung des Produktes kommt, was die Verwendungsmöglichkeiten für das erhaltene Produkt einschränkt. Ein weiterer Nachteil dieses Verfahrens ist, dass der Verzweiger und die Reaktionsprodukte den gesamten Polymerisationsweg durchlaufen, wobei sich eine breite Verweilzeitverteilung ausbildet. Das bedeutet bei Produktwechsel lange Vor- und Nachlaufzeiten, wodurch das Verfahren ökonomisch und ökologisch benachteiligt ist.

EP-A 0 672 703 beschreibt ein diskontinuierliches Verfahren zur Herstellung von sternförmig verzweigten Polyamiden aus Lactamen und mindestens einem Verzweiger, wobei die Zugabe des Verzweigers erst am Ende des Polymerisationsprozesses erfolgt.

Es gibt die Möglichkeit, den Verzweiger nicht direkt am Anfang, sondern später der Polymerisation hinzuzufügen, wie beispielsweise in der EP-A 0 774 480 beschrieben. Gemäß dieser in der EP - A 0 774 480 beschriebenen Verfahrensweise wird erst nach Herstellung eines PA-Präpolymers der Verzweiger in Form einer Mehrfachcarbonsäure, wie Trimesinsäure, der Polymerisation zugesetzt und danach das Polymerisat weiter aufkondensiert. Hierdurch aber werden die oben genannten Nachteile nur teilweise aufgehoben, weil der Verzweiger bzw. die Reaktionsprodukte immer noch eine relativ langen Verweilzeit ausgesetzt werden. Ausserdem ist für die Einspeisung der Verzweiger und für die nachfolgende Aufkondensation des Polymerisates ein erhöhter apparativer Aufwand erforderlich.

Aufgabe der vorliegenden Erfindung ist es daher, ein verbessertes und einfaches kontinuierliches Verfahren zur Herstellung verzweigter Polyamide bereitzustellen, das nicht die oben erwähnten Nachteile, beispielsweise lange Verweilzeit, breite Verweilzeitverteilung und Produktverfärbung der bisher offenbarten kontinuierlichen Verfahren aufweist.

Es wurde nun gefunden, dass diese Aufgabe gelöst werden kann, wenn das Verfahren in der Weise durchgeführt wird, dass der Verzweiger erst am Ende des Polymerisationprozesses der Schmelze zugefügt wird. Dies bedeutet, dass der Verzweiger der Schmelze erst dann zugeführt wird, wenn sich diese im thermodynamischen Gleichgewicht befindet.

Gegenstand der Erfindung ist deshalb ein Verfahren zur Herstellung von sternförmig verzweigten Polyamiden aus Lactamen und/oder Aminocarbonsäuren und mindestens einem Verzweiger, dadurch gekennzeichnet, dass
a) das Verfahren kontinuierlich betrieben wird,
b) die Zugabe des Verzweigers erst am Ende des Polymerisationsprozesses erfolgt und
c) der Verzweiger aus der Gruppe von Verbindungen mit einer esterverknüpften Struktur der allgemeinen Formel (I) 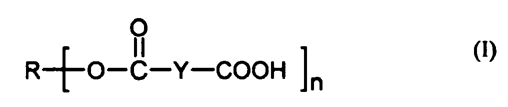 worin
   R und Y für aliphatische und/oder aromatische Kohlenstoffreste mit mindestens 2 Kohlenstoffatomen stehen und
   n für eine ganze Zahl von 3 bis 10 steht, ausgewählt wird.

Durch das erfindungsgemäße Verfahren werden sternförmig verzweigte Polyamide mit fließverbesserten Eigenschaften erhalten, die nicht die oben beschriebenen Verfärbungen aufweisen. Weiterhin können durch Zugabe des Verzweigers am Ende des Polymerisationsprozesses, die oben beschriebenen verfahrenstechnischen Nachteile vermieden werden. Die Lösung der technischen Aufgabe der vorliegenden Erfindung ist insbesondere deshalb überraschend, da der Fachmann vielmehr erwarten würde, dass der Verzweiger für einen effizienten Einbau in die Polymerkette besser am Anfang des Polymerisationsprozesses zudosiert werden muss.

Überraschenderweise nämlich weisen die nach dem erfindungsgemäßen Verfahren erhaltenen Polyamide in Formmassen mit z. B. Glasfasern die gleichen oder nur geringfügig geänderte (d. h. Unterschiede von kleiner als 10 %) mechanische und rheologische Eigenschaften auf wie vergleichbare Formmassen aus verzweigten Polyamiden, die nach den bisher offenbarten kontinuierlichen Verfahren hergestellt wurden.

Für die vorliegende Erfindung geeignet sind sowohl die einstufige als auch die zweistufige Polykondensation. Wird die Polykondensation erfindungsgemäß einstufig ausgeführt, wird das Lactam mit Wasser und ggf. Additiven in einem Reaktor, z.B. einem VK-Rohr, zur Reaktion gebracht. Wird die Polykondensation wenigstens eines Lactams aber erfindungsgemäß zweistufig ausgeführt erfolgt in der ersten Stufe die Herstellung des Präpolymers mittels einer Hydrolyse des Lactams und in der zweiten Stufe die Polykondensation des Präpolymers.

Vorzugsweise erfolgt die Zugabe der Verzweiger im erfindungsgemäßen Verfahren zwischen dem VK-Rohr und der Abspinnung/Granulierung in die Schmelze. Weiterhin ist vorzugsweise zwischen der Dosierung der Verzweiger und der Abspinnung/Granulierung ein Mischelement im Prozess enthalten. Die Dosierung der Verzweiger kann in der gesamten Schmelze oder in Teilströmen der Schmelze, beispielsweise erhalten durch Aufteilung der gesamten Schmelze durch Schmelzeverteiler und separater Aufarbeitung, erfolgen.

Erfindungsgemäß bevorzugt werden als Lactam Caprolactam und als Aminocarbonsäure Aminocapronsäure eingesetzt.

Der Verzweiger wird bevorzugt in Mengen zwischen 0,1 Mol-% und 1 Mol-%, besonders bevorzugt zwischen 0,1 Mol-% und 0,5 Mol-%, bezogen auf die eingesetzte Menge Monomer eingesetzt.

Der Verzweiger wird aus der Gruppe von Verbindungen mit 3 oder mehr Carbonsäuregruppen und mit einer esterverknüpften Struktur der allgemeinen Formel (I) 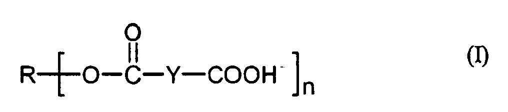 ausgewählt, worin
- R: für aliphatische und/oder aromatische Kohlenstoffreste mit 2 bis 20 Kohlenstoffatomen und gegebenenfalls weiteren Heteroatomen wie Stickstoff, Sauerstoff, Phosphor oder Schwefel steht,
- Y: für aliphatische und/oder aromatische Kohlenstoffreste mit 2 bis 20 Kohlenstoffatomen und gegebenenfalls weiteren Heteroatmen wie Stickstoff, Sauerstoff, Phosphor oder Schwefel steht und
- n: für eine ganze Zahl von 3 bis 10 steht.

Die Verbindungen der allgemeinen Formel (I) erhält man durch ein Verfahren, dadurch gekennzeichnet, dass man tri- oder höherfunktionelle Alkohole oder Alkoholate der allgemeinen Formel (II)

R(-OZ)ₙ (II)

worin R und n die oben angegebenen Bedeutungen haben und Z für Wasserstoff oder für ein Alkalimetall, bevorzugt Natrium oder Kalium, steht, mit einem zyklischen Anhydrid der allgemeinen Formel (III) 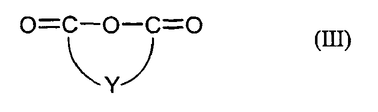 worin
- Y: die oben angegebene Bedeutung hat, gemäß der Reaktionsgleichung: 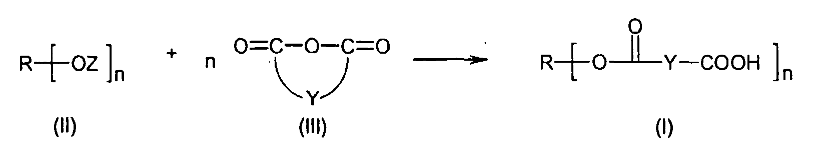
umsetzt.

Beispiele für höherfunktionelle aromatische Alkohole oder Alkoholate der Formel (II) sind Phloroglucin, Pyrogallol, Hydroxyhydrochinon, Phloroglucid oder deren Alkalisalze.

Beispiele für höherfunktionelle heterozyklische Alkohole oder Alkoholate der Formel (II) sind Isobarbitursäure und Cyanursäure oder deren Alkalisalze.

Beispiele für höherfunktionelle aliphatische Alkohole oder Alkoholate der Formel (II) sind Trioxyisobutan, Glycerin, Diglycerin, Triglycerin, Polyglycerin, Trimethylolethan, Trimethylolpropan, Ditrymethylolethan, Ditrimethylolpropan, Erythrit, Pentaerythrit, Dipentaerythrit, Tripentaerythrit, Galactit, Arabit, Adonit, Mannit, Sorbit, Xylit und Methylglucosid sowie Aminoalkohole wie Trimethanolamine, Triethanolamine, und Ethylendinitrilotetraethanol oder deren Alkalisalze.

Bevorzugt sind Pentaerythritol, Dipentaerythritol, Tripentaerythritol.

Ganz besonders bevorzugt sind Dipentaerythritol und Tripentaerythritol

Beispiele aromatischer zyklischer Anhydride der Formel (III) sind Phthalsäureanhydrid, Trimellytsäureanhydrid oder 1,8-Naphthalsäureanhydrid.

Beispiele Heteroatome enthaltender zyklischer Anhydride der Formel (III) sind Chinolinsäureanhydrid oder Pyrazin-2,3-dicarbonsäureanhydrid.

Beispiele von Doppelbindungen aufweisenden zyklischen Anhydriden der Formel (III) sind Maleinsäureanhydrid oder Methyltetrahydrophthalsäureanhydrid.

Beispiele aliphatischer zyklischer Anhydride der Formel (III) sind Bernsteinsäureanhydrid, Glutarsäureanhydrid, 3-Methylglutarsäureanhydrid, Hexahydrophthalsäureanhydrid und die zyklischen Anhydride von Adipinsäure, Pimelinsäure, Korksäure, Azelainsäure und Sebacinsäure.

Bevorzugt sind die zyklischen Anhydride Phthalsäureanhydrid, Bernsteinsäureanhydrid oder Glutarsäureanhydrid.

Besonders bevorzugt ist das zyklische Anhydrid Bernsteinsäureanhydrid.

In einer alternativen Ausführungsform handelt es sich bei den Verbindungen der allgemeinen Formel (I) um die Reaktionsprodukte tri- oder höherfunktioneller Alkohole oder Alkoholate R-(OZ)ₙ der allgemeinen Formel (II) mit Dicarbonsäuren HO₂C-Y-CO₂H der allgemeinen Formel (IV) oder mit Säurechloriden ClOC-Y-COCl der allgemeinen Formel (V) gemäß der folgenden Reaktionsgleichungen: 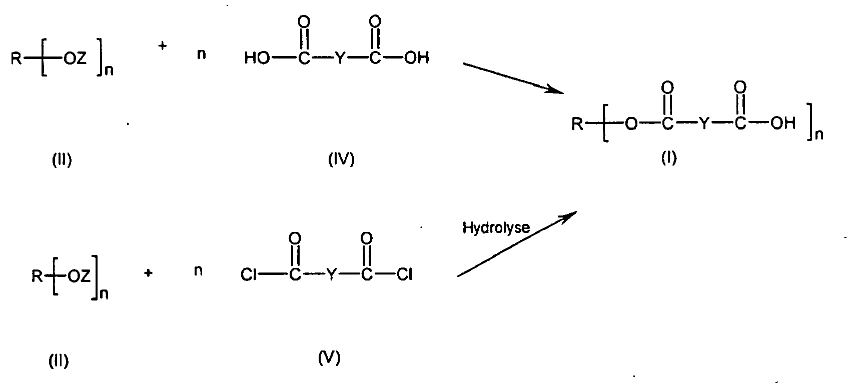 worin R, Y und Z die oben genannten Bedeutungen haben.

Beim mehrfachfuktionellen Alkohol oder Alkoholat R-(OZ)ₙ der allgemeinen Formel (II) handelt es sich um Verbindungen wie oben beschrieben.

Bei der Dicarbonsäure handelt es sich um Verbindungen vom Typ HO₂C-Y-CO₂H der Formel (IV), worin Y die oben genannten Bedeutungen hat.

Beispiele aromatischer Dicarbonsäuren der Formel (IV) sind Phthalsäure, Terephthalsäure, Isophthalsäure und 1,8-Naphthalsäure.

Beispiele heterozyklischer Dicarbonsäuren der Formel (IV) sind Chinolinsäure und Pyrazin-2,3-dicarbonsäure.

Beispiele für Doppelbindungen aufweisende Dicarbonsäuren der Formel (IV) sind Fumarsäure, Maleinsäure und Methyltetrahydrophthalsäure.

Beispiele für aliphatische Dicarbonsäuren der Formel (IV) sind Bernsteinsäure, Glutarsäure, 3-Methylglutarsäure, Hexahydrophthalsäure, Hexahydroterephthalsäure, Adipinsäure, Pimelinsäure, Korksäure, Azelainsäure und Sebacinsäure.

Beispiele für die Säurechloride der Formel (V) sind die zu den genannten Säuren korrespondierenden Säurechloride.

Erfindungsgemäß bevorzugt werden Verbindungen der Formel (I) eingesetzt, die über den Alkohol und das Anhydrid hergestellt werden, gegebenenfalls unter Einsatz der für den Fachmann aus dem Stand der Technik bekannten Katalysatoren.

Die Verzweiger werden bevorzugt in flüssiger Form der Polymerisation zugeführt.

Die Verzweiger werden besonders bevorzugt als Lösung in Wasser, Lactam oder einer Mischung aus beidem der Polymerisation zugeführt.

Gegebenenfalls können noch weitere Initiatoren, Starter und/oder Kettenregler hinzugefügt werden, um das Molekulargewicht oder die Molekulargewichtsverteilung des Polyamids einzustellen. Diese Initiatoren, Starter und/oder Kettenregler werden bevorzugt der Druckstufe zugeführt.

Beispiele von weiteren Kettenreglern sind aliphatische oder aromatische ein- oder zweiwertige Carbonsäuren, die sich im eingesetzten Wasser/Lactamgemisch lösen.

Bevorzugt handelt es sich bei den weiteren Kettenreglern um Propionsäure oder Adipinsäure.

Gegenstand der Erfindung ist weiterhin ein Verfahren zur Herstellung von Polyamiden aus Lactamen und/oder Aminocarbonsäuren, wobei noch weitere Kettenregler, Starter und/oder Initiatoren eingesetzt werden.

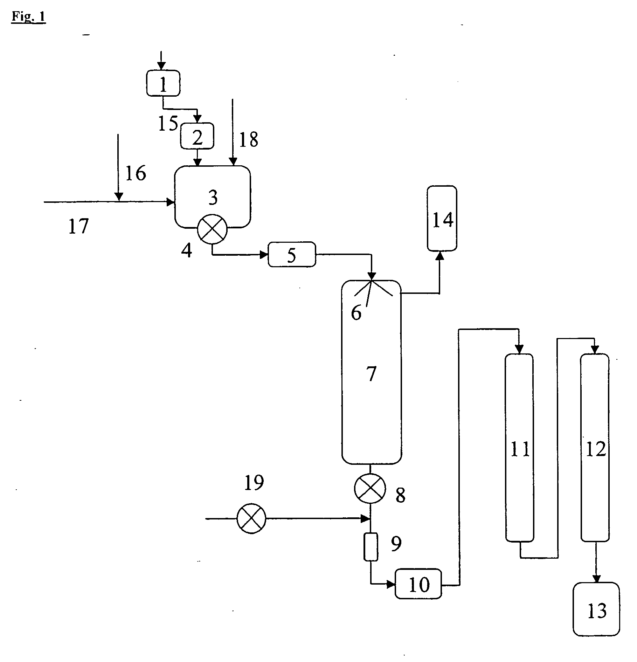

Zwar können die Polyamide wie oben beschrieben erfindungsgemäß sowohl nach dem einstufigen als auch nach dem zweistufigen Verfahren hergestellt werden, erfindungsgemäß bevorzugt werden sie aber nach einem zweistufigen, kontinuierlichen Verfahren, das in Fig. 1 dargestellt ist, hergestellt. Für das Verfahren der direkten Zugabe von Verzweigern in die Polymerisation (siehe auch Vergleichsbeispiele) wird in einem Ansatzbehälter (1) eine Lösung enthaltend Wasser, Caprolactam, Verzweiger oder Kettenregler oder Mischungen aus den vorgenannten Komponenten hergestellt, die über einen Vorlagenbehälter (2) der Druckstufe (3) zugeführt werden (Stoffstrom 15). Alternativ kann die Lösung auch dem Caprolactamzulaufstrom (16, 17) zugeführt werden. In die Druckstufe wird Caprolactam zugespeist (15), wobei gegebenenfalls zusätzlich Wasser und Kettenregler zudosiert (18) werden kann. Durch Eigendruck oder über eine Schmelzeaustragspumpe (4) wird das Vorpolymerisat direkt oder über einen Schmelzetrockner (5) in ein VK-Rohr (7) entspannt. Die Schmelze kann dabei vorzugsweise über einen Schmelzeverteiler (6) laufen. Flüchtige Komponenten insbesondere Wasser werden über einen Dephlegmator (14) ausgetragen, wobei Caprolactam wieder zurückgeführt wird. Für das erfindungsgemäße Verfahren erfolgt die Zugabe von Verzweigern in Substanz oder als Lösung über eine Einspeisung hinter dem VK-Rohr oder hinter der Schmelzeaustragspumpe (8) beispielsweise über Pumpen oder einen Seitenextruder (19). Zwischen der Dosierung und der Abspinnung/Granulierung (10) ist vorzugsweise noch ein Mischelement (9) eingefügt. Bei beiden Verfahren ist der weitere Prozessverlauf gleich. Die Schmelze wird der Abspinnung/Granulierung (10) zugeführt, wobei es sich um eine Stranggranulierung mit Spinnbad oder eine Unterwassergranulierung handeln kann. Das Granulat wird anschließend extrahiert (11), getrocknet oder nachkondensiert (12) und in einen Silo (13) überführt.

### Beispiele

### Synthese einer Hexacarbonsäure (HCSE) aus Dipentaerythrit und Bernsteinsäureanhydrid (Nicht erfindungsgemäß)

Bernsteinsäureanhydrid (1,16 kg) wurde vorgelegt und bei 135 °C langsam aufgeschmolzen. Getrocknetes Dipentaerythrit (490 g) wurde innerhalb von 7 Minuten zugegeben. Die Reaktion lief exotherm ab und die Temperatur stieg bis 173°C. Die Badtemperatur wurde auf 135 °C herabgeregelt, und der Ansatz 3 Stunden bei dieser Temperatur nachgerührt. Der Ansatz wurde schließlich warm in einen Behälter abgefüllt. Nach dem Abkühlen auf Raumtemperatur liegt das Produkt als eine zähe, klebrige Paste vor (1,61 kg, 98 % d. Th.).

### Vergleichsbeispiel

Die Herstellung des Polyamides (PA) erfolgt in einer zweistufigen kontinuierlichen Fahrweise bestehend aus Druckstufe und Entspannungsstufe. Der Lactamstrom wird bei 240°C der Druckstufe zugeführt. Die Zugabe von 91 g/h HCSE in 691 g Lactamwasser (60 % wässrige Lösung) erfolgt separat in die Druckstufe. Die Verweilzeit in der Druckstufe beträgt 2 Stunden. Die Produkttemperatur am Austritt wird über einen Schmelzetrockner eingestellt. Die Entspannungsstufe wird im Kopf bei 280°C und im unteren Bereich bei 250°C betrieben. Die Verweilzeit der Schmelze in der Entspannungsstufe beträgt 12 Stunden.

| Technologische Einstellung: | |
|---|---|
| Durchsatz: | 8 kg/h |
| Laktameintritt Druckstufe: | 240 °C |
| Verweilzeit Druckstufe: | 2 h |
| Produkttemperatur Austritt Druckstufe: | 275 °C |
| Produkttemperatur NK1, oben: | 280 °C |
| Produkttemperatur NK1, unten: | 250 °C |
| Wasserbelastung: | 3 % |

### Beispiel (erfindungsgemäß)

Dieses Beispiel wird analog dem Vergleichsbeispiel durchgeführt, mit dem Unterschied dass die Dosierung der Verzweiger nicht in der Druckstufe erfolgt sondern im Anschluss an das VK-Rohr, wo die PA-Schmelze über eine Seitendosierung mit 238 g/h einer Lösung von 136 g HCSE in 102 g Lactam versetzt wird und über einen statischen Mischer vermischt.

Bestimmung der Gelbwert am Granulat in Anlehnung an die DIN 6167.

### Herstellung von glasfaservertstärkten Formmassen (nicht erfindungsgemäß):

### Verwendete Komponenten

| | | |
|---|---|---|
| A) | Polyamid gemäß Vergleichsbeispiel oder Beispiel | 69,5 Gew.-% |
| B) | Glasfasern (CS 7928, Handelsprodukt der Bayer AG) | 30,0 Gew.-% |
| C) | Nukleierungsmittel (5 %-ige Masterbatch von Talkum in PA6) | 0,35 Gew.-% |
| D) | Entformungsmittel (Montanesterwachs): | 0,15 Gew.-% |

Polyamid A) und die Komponenten C) und D) werden gemischt und in einem kontinuierlich arbeitenden Doppelwellenextruder aufgeschmolzen. Über einen zweiten Dosiertrichter werden die Glasfasern (Komponente B) in die Schmelze dosiert. Die Zylindertemperaturen werden dabei so gewählt, dass Massetemperaturen von 260 bis 300°C eingehalten werden. Der Schmelzestrang wird in Wasser eingeleitet, granuliert und getrocknet. Von den Formmassen wird die Melt Volume Rate (MVR) bestimmt nach ISO 1133 bei 20 min. Vorwärmzeit. Außerdem werden von den Formmassen auf einer Spritzgussmaschine Prüfkörper für die mechanische Prüfung hergestellt. Während des Spritzgussvorgangs wird der benötigte Fülldruck ermittelt. An den Prüfkörpern werden folgende Prüfungen durchgeführt. Zugversuch nach ISO 527, Biegeversuch nach ISO 178 sowie Schlagzähigkeit bei Raumtemperatur nach Izod (ISO 180). Die Ergebnisse sind der nachfolgenden Tabelle 1 zu entnehmen:

**Tabelle 1**

| | ***Vergleichsbeispiel*** Dosierung in Druckstufe | ***Beispiel*** Dosierung in Schmelze | ***Unterschied in Eigenschaften zwischen Vergleichsbeispiel und Beispiel*** |
|---|---|---|---|
| | **(Vor VK-Rohr)** | **(Nach VK-Rohr)** | |
| Verzweiger | HCSE | HCSE | - |
| Konz. Gegenüber Caprolactam | 0,15 mol-% | 0,15 mol-% | - |
| Rel. Viskosität Basisharz | 2,18 | 2,15 | -1 % |
| Fülldruck [bar] | 103 | 106 | +3 % |
| Schlagzähigkeit [kJ/m²] | 38 | 41 | +8 % |
| Zugfestigkeit [MPa] | 184 | 181 | -2 % |
| Bruchdehnung [%] | 2,5 | 2,7 | +8 % |
| Zugmodul [MPa] | 9710 | 9650 | -1 % |
| MVR 240°C, 20 Min. [cm³/10 min.] | 55 | 55 | 0% |
| MVR 260°C, 20 Min. [cm³/10 min.] | 96 | 102 | +6% |
| Gelbwert Basisharz | +37,8 | +1,6 | -96% |

Aus Tabelle 1 ist ersichtlich, dass durch Zugabe des Verzweigers erst am Ende des Polymerisationsschritts (nach dem VK-Rohr) ein Polyamid erhalten wird, dass in einer Formmasse zu vergleichbaren Eigenschaften führt, insbesondere hinsichtlich Fließfähigkeit, wie ein Polyamid erhältlich durch Zugabe der gleichen Verzweigermenge am Anfang des Polymerisationsschritts. Die Unterschiede in den mechanischen und rheologischen Eigenschaften von den Compounds, hergestellt aus beiden Polyamiden sind kleiner als 10%, der Gelbwert des Basisharzes, das erfindungsgemäß hergestellt wurde, ist jedoch deutlich niedriger.

## Patentansprüche

1. Verfahren zur Herstellung sternförmig verzweigter Polyamide aus Lactamen und/oder Aminocarbonsäuren und mindestens einem Verzweiger, **dadurch gekennzeichnet, dass**
a) das Verfahren kontinuierlich betrieben wird,
b) die Zugabe des Verzweigers erst am Ende des Polymerisationsprozesses erfolgt und
c) der Verzweiger aus der Gruppe von Verbindungen mit einer esterverknüpften Struktur der allgemeinen Formel (1) 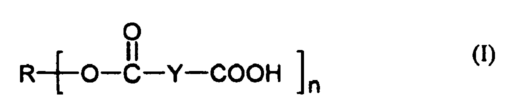 worin
R und Y für aliphatische und/oder aromatische Kohlenstoffreste mit mindestens 2 Kohlenstoffatomen stehen und
n für eine ganze Zahl von 3 bis 10 steht, ausgewählt wird.

2. Verfahren gemäß Anspruch 1, wobei weitere Kettenregler, Starter und/oder Initiatoren eingesetzt werden.

3. Verfahren gemäß der Ansprüche 1 oder 2, wobei der Verzweiger in Mengen zwischen 0,01 Mol.-% und 1 Mol.-% bezogen auf die eingesetzte Menge Monomer eingesetzt wird.

4. Verfahren gemäß einem der Ansprüche 1 bis 3, wobei als Lactam, Caprolactam und als Aminocarbonsäure Aminohexansäure eingesetzt wird.

5. Verfahren gemäß einem der Ansprüche 1 bis 4, **dadurch gekennzeichnet, dass** dieses ein zweistufiges Verfahren ist.

6. Formmassen erhältlich nach dem Verfahren gemäß einem der Ansprüche 1 bis 5.

## Claims

1. Process for the preparation of star-branched polyamides from lactams and/or aminocarboxylic acids and at least one branching agent, **characterized in that**
a) the process is operated continuously,
b) the addition of the branching agent is effected only at the end of the polymerization process and
c) the branching agent is selected from the group consisting of compounds having an ester-linked structure of the general formula (I) 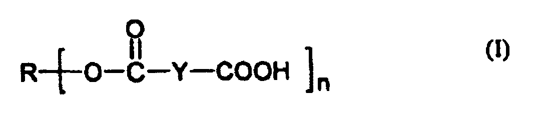 in which
R and Y represent aliphatic and/or aromatic carbon radicals having at least 2 carbon atoms and
n represents an integer from 3 to 10.

2. Process according to Claim 1, further chain-transfer agents, starters and/or initiators being used.

3. Process according to Claim 1 or 2, the branching agent being used in amounts between 0.01 mol% and 1 mol%, based on the amount of monomer used.

4. Process according to any of Claims 1 to 3, the lactam used being caprolactam and the aminocarboxylic acid used being aminohexanoic acid.

5. Process according to any of Claims 1 to 4, **characterized in that** it is a two-stage process.

6. Moulding materials obtainable by the process according to any of Claims 1 to 5.

## Revendications

1. Procédé de préparation de polyamides ramifiés en forme d'étoile à partir de lactames et/ou d'acides aminocarboxyliques et d'au moins un agent de ramification, **caractérisé en ce que**
a) le procédé fonctionne en continu,
b) l'addition de l'agent de ramification est effectuée seulement à la fin du processus de polymérisation, et
c) l'agent de ramification est choisi parmi le groupe de composés présentant une structure à liaison ester de formule générale (I) 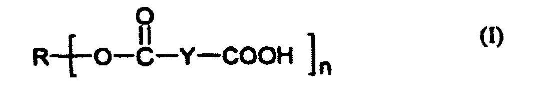 dans laquelle
R et Y représentent des radicaux carbonés aliphatiques et/ou aromatiques, renfermant au moins 2 atomes de carbone, et
n représente un entier de 3 à 10.

2. Procédé selon la revendication 1, dans lequel on utilise des régulateurs de chaîne, des inducteurs et/ou des amorceurs supplémentaires.

3. Procédé selon la revendication 1 ou 2, dans lequel l'agent de ramification est utilisé en des quantités comprises entre 0,01 % en moles et 1 % en moles, par rapport à la quantité de monomère utilisée.

4. Procédé selon l'une quelconque des revendications 1 à 3, dans lequel on utilise du caprolactame en tant que lactame et de l'acide aminohexanoïque en tant qu'acide aminocarboxylique.

5. Procédé selon l'une quelconque des revendications 1 à 4, **caractérisé en ce que** celui-ci est un procédé en deux étapes.

6. Compositions de moulage pouvant être obtenues conformément au procédé selon l'une quelconque des revendications 1 à 5.
